# EUROPÄISCHE PATENTANMELDUNG

(11) **EP 1 179 933 A2**
(43) Veröffentlichungstag der Anmeldung: **13.02.2002**
(21) Anmeldenummer: 01119378.6
(22) Anmeldetag: 10.08.2001
(51) Int. Cl.: H04L 25/00

(54) **Drahtfreie Übertragungsstrecke für digitale Daten**

(30) Priorität: 10.08.2000 DE 10039187
(71) Anmelder: Bauer, Werner, 97497 Dingolshausen (DE); Wurst, Rainer, 72805 Lichtenstein (DE)
(72) Erfinder: Bauer, Werner, 97497 Dingolshausen (DE)
(74) Vertreter: Englaender, Klaus, Dipl.-Ing.

(57) **Zusammenfassung**

Die Erfindung betrifft eine digitale Datenübertragungsstrecke, insbesondere zum Übertragen von digitalen Audiodaten, mit einem Sender (11), der mit einem zu sendenden digitalen Datenstrom beaufschlagt ist, und mit einem Empfänger, der mit dem gesendeten digitalen Datenstrom beaufschlagt ist. Erfindungsgemäß ist vorgesehen, daß dem Sender (11) eine Signalanpassungsschaltung (12) vorgeschaltet ist, welche die Signalform des ihm zugeführten digitalen Datenstroms in eine vom Sender (11) verlustfrei übertragbare Signalform umsetzt.

## Beschreibung

Die vorliegende Erfindung betrifft eine digitale Datenübertragungsstrecke, insbesondere zum Übertragen von digitalen Audiodaten, mit einem Sender, der mit einem zu sendenden digitalen Datenstrom beaufschlagt ist, und mit einem Empfänger, der mit dem gesendeten digitalen Datenstrom beaufschlagt ist.

Eine derartige digitale Datenübertragungsstrecke wird bisher beispielsweise genutzt, um die Stereosignale von einem Quellengerät, wie etwa eine CD-Player, schnurlos zu einem Kopfhörer zu übertragen. Nachteilig an bisherigen Datenübertragungsstrecken dieser Art ist, daß sie keine 1:1 Datenübertragung, d.h. keine verlustreiche Datenübertragung ermöglichen. Unter anderem werden hierbei Datenreduktionsalgorithmen eingesetzt, um bei dem zur Verfügung stehenden Übertragungsbereich im Megahertzbereich die Funktion sicherzustellen. Für eine hochwertige Datenübertragung zwischen z.B. einem CD-Player und aktiven Lautsprechern wurden die bekannten Übertragungsstrecken deshalb nicht eingesetzt.

Ein weiterer Nachteil herkömmlicher digitaler Datenübertragungsstrecken der eingangs genannten Art ist, daß diese aufgrund begrenzter Bandbreite beschränkt sind auf die Übertragung von analogen Signalen von ursprünglich zwei Kanälen.

Um den Nachteil einer verlustbehafteten Datenübertragung zu überwinden, wurde bereits in Betracht gezogen, einen größeren Bauteileaufwand zu treiben. Dies hat jedoch nicht zu einer praktischen Realisierung geführt, weil die damit verbundenen Kosten zu hoch sind.

Auf dem Gebiet drahtgebundener Übertragung analoger Signale sind sogenannte Multicore-Anordnungen bekannt, bei welchem beispielsweise von einer Bühne über Mikrofone analoge Signale zu einer entfernten Station, beispielsweise einem Aufnahme- und Sendewagen übertragen werden. Diese Übertragungsweise analoger Signale ist aufgrund der relativ langen und durch Kabel zu überwindenden Strecken mit Verlusten behaftet und u.a., auch wegen der vor Ort erforderlichen Verlegungsarbeit von Multicore-Kabeln, kostenaufwendig.

Eine Aufgabe der vorliegenden Erfindung besteht darin, zur Überwindung der vorstehend angeführten Nachteile eine digitale Datenübertragungsstrecke zu schaffen, die bei kostengünstiger Auslegung eine verlustfreie Übertragung eines digitalen Datenstroms gewährleistet.

Eine weitere Aufgabe der vorliegenden Erfindung besteht darin, bisherige Multicore-Anordnungen kostengünstig zur verlustfreien Signalübertragung zu ersetzen.

Gelöst wird diese Aufgabe durch die Merkmale des Anspruchs 1. Vorteilhafte Weiterbildungen der Erfindung sind in den Unteransprüchen angegeben.

Demnach ist Kern der Erfindung eine Signalanpassungsschaltung, die den zu sendenden digitalen Datenstrom einer Signalformwandlung derart unterzieht, daß der gewandelte digitale Datenstrom problemlos, d.h. verlustfrei vom Sender gesendet werden kann. Dieser Datenstrom kann vom Empfänger problemlos empfangen und anschließend von der Empfängeranordnung verarbeitet werden. Gemäß einer vorteilhaften Variante wird jedoch empfängerseitig der ursprüngliche digitale Datenstrom dadurch rückgewonnen, daß in der Empfangsanordnung eine zur Senderanordnung komplementäre Signalanpassungsschaltung vorgesehen ist, die die ursprüngliche Signalform dieses Datenstroms 1:1 rückgewinnt.

Die erfindungsgemäße Signalanpassungsschaltung(en) kann bzw. können mit herkömmlichen Bauelementen äußerst kostengünstig realisiert werden, so daß die digitale Datenübertragungsstrecke insgesamt kostengünstig bereitgestellt werden kann, da diese im übrigen auf einem herkömmlichen kostengünstigen Sender und einem herkömmlichen kostengünstigen Empfänger basieren kann.

Die für eine verlustfreie digitale Datenübertragung benötigte Sendefrequenz kann, wie an sich bekannt, im Megahertzbereich angesiedelt sein. Um den Sende- und Empfangsvorgang an sich noch störungsfreier zu gestalten, ist die Sendefrequenz im Gigahertzbereich angeordnet. Der Gigahertzbereich hat darüber hinaus den Vorteil, daß eine viel größere nutzbare Bandbreite zur Verfügung steht, so daß ein noch größerer Datenstrom als im Megahertzbereich übertragen werden kann.

Mit anderen Worten basiert die Erfindung auf der Erkenntnis, daß bislang eine verlustfreie Datenübertragung bei kostengünstiger Realisierung deshalb nicht möglich war, weil die Signalform des zu sendenden digitalen Datenstroms vom Sender (und vom Empfänger) nicht verlustfrei verarbeitet werden konnte. Weil die Amplitude des digitalen Datenstroms nicht optimal an den Sender (und Empfänger) angepaßt war und weil insbesondere die Form, d.h. vor allem die Flanke des Signals des digitalen Datenstroms nicht an die Gegebenheiten des Senders angepaßt war. Dieser Nachteil wird durch die erfindungsgemäße Signalanpassungsschaltung in der Senderanordnung überwunden.

Wegen der verlustfreien Datenübertragung eignet sich die erfindungsgemäße Übertragungsstrecke für hochwertige drahtlose Übertragungen von Audiosignalen z.B. zu aktiven Lautsprechern.

Gemäß einer besonders vorteilhaften Weiterbildung der Erfindung, die im Anspruch 31 näher ausgeführt ist, können auch mehr als die bislang übertragbaren zwei Audiokanäle durch die erfindungsgemäße digitale Datenübertragungsstrecke übertragen werden, so daß diese erfindungsgemäße Übertragungsstrecke einen kostengünstigen und zuverlässigen verlustfreien Ersatz für bisherige Multicore-Anwendungen darstellt.

Eine in sich sichere Funktion der erfindungsgemäßen digitalen Datenübertragungsstrecke wird durch die Merkmale der Ansprüche 13 und 14 gewährleistet.

Eine bevorzugte Ausführungsform der digitalen Übertragungsstrecke ist in den Ansprüchen 15 bis 31 sowohl hinsichtlich Senderanordnung wie Empfängeranordnung angeführt, und zwar auf herkömmlichen Bauelementen basierend, die in integrierter und damit miniaturisierter platzsparender Form kostengünstig verfügbar sind.

Nachfolgend wird die Erfindung anhand der Zeichnungen beispielhaft näher erläutert; es zeigen:
- Fig. 1: die Senderanordnung einer bevorzugten zweikanaligen digitalen Audio-Übertragungsstrecke und
- Fig. 2: die Empfängeranordnung der bevorzugten zweikanaligen digitalen Audio-Übertragungsstrecke.

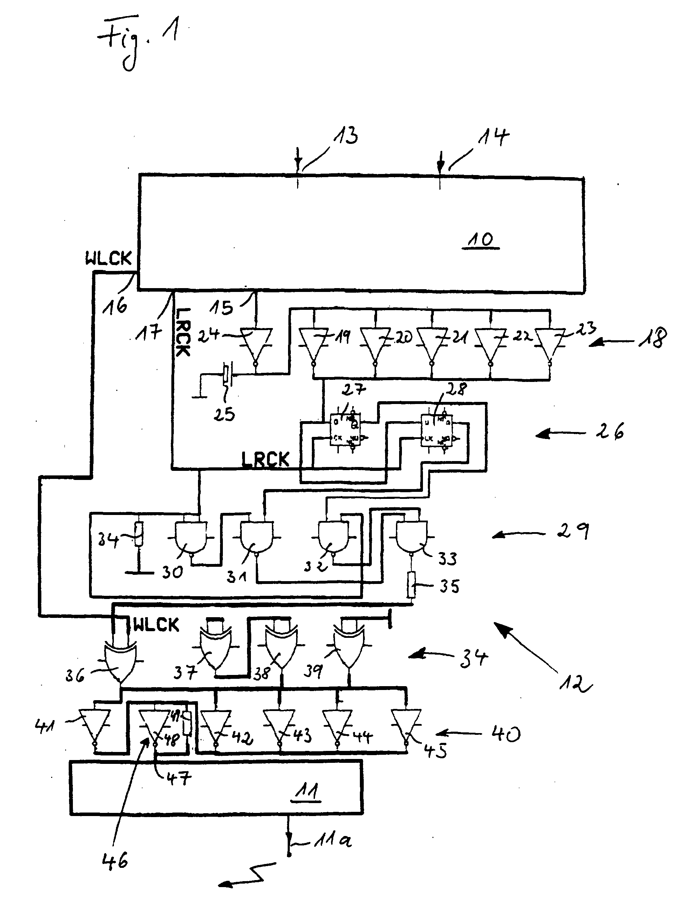

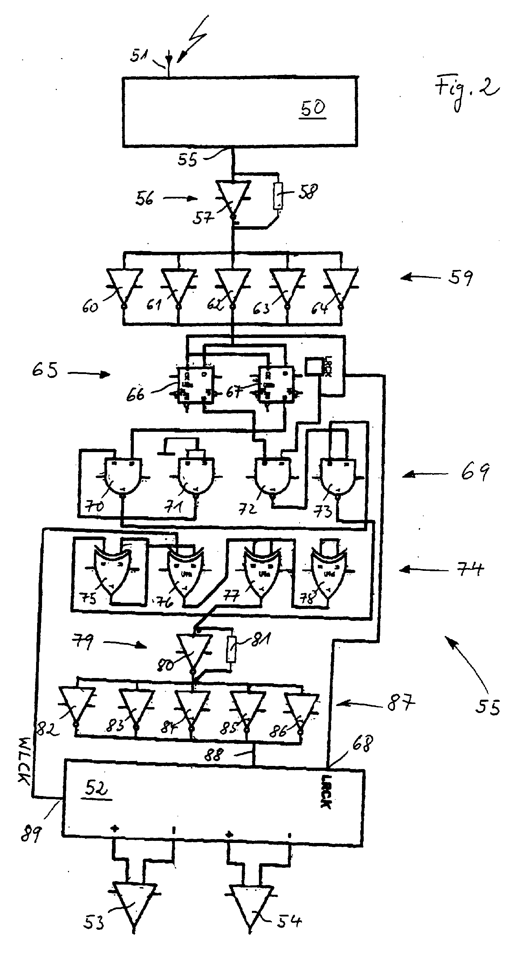

Die in Fig. 1 und 2 gezeigte Ausführungsform einer drahtlosen digitalen Datenübertragungsstrecke ist als zweikanalige Übertragungsstrecke, beispielsweise zum Übertragen von digitalen Audiodaten ausgelegt. Diese digitale Übertragungsstrecke ist jedoch nicht auf zwei Kanäle beschränkt, sondern kann mit aktuell verfügbaren Mitteln ohne weiteres beispielsweise auf bis 384 Kanäle erweitert werden. Alternativ können die Daten auch "formatfrei", nicht in Kanäle organisiert, übertragen werden.

Zunächst wird die Senderanordnung der zweikanaligen Übertragungsstrecke anhand von Fig. 1 näher erläutert.

Die in Fig. 1 gezeigte senderseitige Anordnung der digitalen Datenübertragungsstrecke umfaßt eingangsseitig einen Analog/Digital-Wandler (im folgenden als A/D-Wandler bezeichnet) 10 und ausgangsseitig einen Sender 11 zum Senden digitaler Daten. Um den zu sendenden digitialen Datenstrom, der vom A/D-Wandler 10 ausgegeben wird, mit vollem Informationsgehalt über den Sender 11 zu der in Fig. 2 gezeigten Empfängeranordnung übertragen zu können, ist zwischen dem D/A-Wandler 10 und dem Sender 11 eine Signalanpassungsstufe 12 angeordnet, die den vom D/A-Wandler 10 ausgegebenen Datenstrom vor Einspeisung in den Sender 11 derart aufbereitet, daß eine verlustfreie Datenübertragung mittels des Senders 11 zum Empfänger gewährleistet ist.

Der D/A-Wandler 10, bei dem es sich bevorzugt um einen Wandler mit einer Auflösung von zumindest 24 Bit und einer Abtastrate von zumindest 96 Kilohertz handelt, wird in der dargestellten Ausführungsform als zweikanaliger A/D-Wandler genutzt. Der A/D-Wandler 10 umfaßt zwei Eingänge 13 und 14 zur Einspeisung analoger (Stereo)-Signale in den A/D-Wandler 10. Am Ausgang 15 des A/D-Wandlers 10 liegt ein digitaler Datenstrom an, der ein digitales Abbild der ursprünglich in die Eingänge 13, 14 eingespeisten analogen Signale darstellt und beispielsweise im S/PDIF- Format vorliegt. An zwei weiteren Ausgängen 16, 17 des A/D-Wandlers 10 liegen Taktsignale des Wandlers an. Insbesondere liegt am Ausgang 16 ein WCLK-Signal (WCLK steht für Word Clock) an, während am Ausgang 17 ein LRCK-Signal (LRCK steht für Left Right Clock) anliegt. Das S/PDIF-Signal bzw. der -Datenstrom am Ausgang 15 ist durch eine trapezförmige Signalform und eine Amplitude von charakteristischer Weise 0,5 Volt gekennzeichnet. Zumindest dann, wenn der Sender 11 (und der entsprechende Empfänger) mit einer Frequenz im Gigahertz-Bereich (alternativ im MHz-Bereich) betrieben wird, um eine ausreichende Bandbreite zur Übertragung des digitalen Datenstrom zu gewährleisten, hat sich herausgestellt, daß diese Signalform nicht verlustfrei über den Sender 11 verarbeitet und abgestrahlt und vom Empfänger verlustfrei empfangen werden kann. Um diesen Mißstand zu überwinden, ist zwischen den A/D-Wandler 10 und den Sender 11 die Signalanpassungsschaltung 12 geschaltet, die im folgenden näher erläutert ist.

Die Signalanpassungsschaltung 12 umfaßt als Eingangsstufe einen vom S/PDIF-Signal am Ausgang 15 des A/D-Wandlers 10 beaufschlagte Pufferschaltung 18, bestehend aus fünf parallel geschalteten Inverterstufen 19 bis 23, denen seriell eine weitere Inverterstufe 24 vorgeschaltet ist, die eingangsseitig mit dem Ausgang 15 des A/D-Wandlers 10 und ausgangsseitig über einen Schwingquarz 25 auf Masse gelegt ist. Durch die Pufferschaltung 18 wird eine Rückwirkung der Signalanpassungsschaltung 12 auf den A/D-Wandler unterbunden. Bevorzugt besteht die Pufferschaltung 18 aus den sechs Inverterstufen eines integrierten Hex.-Inverters.

Auf die Ausgangsstufe 18 folgt in der Anpassungsschaltung 12 eine AmplitudenAnpassungsschaltung 26 in Gestalt einer Flip-Flop-Schaltung bzw. eines Dual-Flip-Flop. Der digitale Datenstrom am Ausgang der Pufferschaltung 18 wird in den D-Eingang eines ersten Flip-Flop 27 und den D-Eingang eines zweiten Flip-Flop 28 eingespeist. Die Takteingänge der beiden Flip-Flop 27 und 28 sind verbunden mit dem Takt-Ausgang 17 des A/D-Wandlers 10, der den LRCK-Takt führt. An den Q-Ausgängen der beiden Flip-Flop 27, 28 liegt der am Ausgang der Verschaltung 18 anliegende digitale Datenstrom mit einer Amplitude an, die auf TTL- bzw. HC-Niveau angehoben ist, nämlich auf einen Amplitude von 3 Volt. Dieser Datenstrom wird in eine NAND-Gatterschaltung 29 eingespeist.

Die NAND-Gatterschaltung 29 umfaßt vier NAND-Gatter 30, 31, 32 und 33. Die beiden Eingänge des NAND-Gatters 30 sind gemeinsam mit dem Ausgang 17 des A/D-Wandlers 10 verbunden und dadurch mit dem LRCK-Takt beaufschlagt. Außerdem sind die beiden Eingänge des NAND-Gatters 30 über einen Widerstand 34 verbunden. Der Ausgang des NAND-Gatters 30 ist mit einem Eingang des NAND-Gatters 31 verbunden, dessen anderer Eingang mit dem Q-Ausgang des Flip-Flop 28 verbunden ist. Der Ausgang des NAND-Gatters 31 ist mit einem Eingang des NAND-Gatters 33 verbunden, dessen anderer Eingang mit dem Ausgang des NAND-Gatters 33 verbunden ist. Ein Eingang des NAND-Gatters 32 ist mit dem Q-Ausgnag des Flip-Flop 27 verbunden und der anderer Eingang des NAND-Gatters 32 ist mit dem Ausgang 17 des A/D-Wandlers 10 verbunden, der das LRCK-Taktsignal führt. Der Ausgang des NAND-Gatters 33 bildet den Ausgang der NAND-Gatterschaltung 29. An diesem Ausgang liegt ein digitaler Datenstrom an, dessen Flanken in bezug auf den ursprünglichen Datenstrom am Ausgang 15 des A/D-Wandlers steiler verlaufen. Insbesondere besitzt der Datenstrom am Ausgang der NAND-Gatterschaltung 29 Rechteckform, während die Signalform des Ausgangssignals des A/D-Wandlers wie vorstehend angeführt, Trapezform besitzt.

An die NAND-Gatterschaltung 29 schließt sich eine Inverterschaltung 34 zur seriellen Ausgabe des digitalen Datenstroms von der NAND-Gatterschaltung 29 an. Die Inverterschaltung 34 ist über einen Widerstand 35 mit dem Ausgang der NAND-Gatterschaltung 29 verbunden. Im Einzelnen umfaßt die Inverterschaltung 34 vier EXOR-Gatter 36, 37, 38 und 39. Ein Eingang des EXOR-Gatters 36 ist mit dem Ausgang der NAND-Gatterschaltung 29 über den Widerstand 35 verbunden, und der andere Eingang des EXOR-Gatters 36 ist mit dem Taktausgang 16 des A/D-Wandlers 10 verbunden, der das WLCK-Taktsignal führt. Der Ausgang des EXOR-Gatters 36 ist mit dem Ausgang des EXOR-Gatters 38 und dem Ausgang des EXOR-Gatters 39 verbunden, um diese Ausgänge legen gemeinsam dem Ausgang der Inverterschaltung 34 fest. Die beiden Eingänge des EXOR-Gatters 37 liegen auf positiver Versorgungsspannung (5DVDD) für die Inverterschaltung 34 und der Ausgang des EXOR-Gatters 37 ist mit beiden Eingängen des EXOR-Gatters 38 verbunden. Die beiden Eingänge des EXOR-Gatters 39 liegen auf Masse (DGND).

Auf die Inverterschaltung folgt als Ausgangsstufe der Anpassungsschaltung 12 eine Pufferschaltung 40 ähnlich der Pufferschaltung 18 mit fünf parallelgeschalteten Pufferstufen 41 bis 45. Diese Pufferschaltung 40 ist eingangsseitig mit dem Ausgang der Inverterschaltung 34 und ausgangsseitig mit einer Amplitudenbeschneidungsschaltung 46 verbunden, die ausgangsseitig mit dem Eingang 47 des Senders 11 verbunden ist. Die Amplitudenbeschneidungsschaltung 46 umfaßt eine Pufferstufe 48, deren Ein- und Ausgang mittels eines Widerstands 49 überbrückt ist. Bei den Pufferstufen 41 bis 45 und 48 kann es sich um die sechs Pufferstufen eines Hex.-Inverters handeln.

Durch die vorgeschaltete Anpassungsschaltung 12 wird der Sender 11 demnach mit einem digitalen Datenstrom versorgt, dessen Signalform, abgeleitet von dem ursprünglichen Datensignalstrom des D/A-Wandlers 10 bezüglich Amplitude und Flankensteilheit derart ausgelegt ist, daß dieser Datenstrom problemlos vom Sender 11, d.h., verlustfrei gesendet werden kann.

Anhand von Fig. 2 ist im folgenden die Empfängeranordnung der erfindungsgemäßen digitalen Datenübertragungsstrecke erläutert.

Die Empfängeranordnung umfaßt einen Empfänger 50 mit einer Antenne 51, die drahtlos mit einer Antenne 11a des Senders 11 kommuniziert. Die Antennen 11a und 51 können alternativ durch eine Glasfaser-Übertragungsstrecke ersetzt sein.

Die eingangsseitig den Empfänger 50 aufweisende Empfängeranordnung umfaßt ausgangsseitig einen Digital/Analog-Wandler (im folgenden D/A-Wandler genannt) 52, bevorzugt mit einer Auflösung von zumindest 24 Bit und einer Abtastrate von zumindest 96 kHz, dem ausgangsseitig Puffer/Tiefpaßfilterschaltungen 53 und 54 nachgeschaltet sind, an dessen Ausgängen die wiedergewonnen analogen Signale anliegen, die in die Eingänge 13 und 14 des A/D-Wandlers 10 in der Senderanordnung von Fig. 1 eingegeben worden sind. Zwischen Empfänger 50 und D/A-Wandler 52 ist eine Signalanpassungsschaltung 55 geschaltet, die in ihren Signalformungssabschnitten das Kompliment der Signalanpassungsschaltung 12 in der Senderanordnung gemäß Fig. 1 darstellt und im übrigen ähnliche vorgeschaltete und nachgeschaltete Pufferschaltungen wie die Anordnung von Fig. 1 aufweist.

Auf den Ausgang 55 des Empfängers 50 folgt eine Amplitudenbeschneidungsschaltung 56 in Gestalt einer Pufferstufe 27, deren Eingang und Ausgang mit einem Widerstand 58 überbrückt ist. An die Amplitudenbeschneidungsschaltung 56 schließt sich eine Pufferschaltung 59 an, die fünf parallel geschaltete Pufferstufen 60 bis 64 umfaßt.

Auf die Pufferschaltung 59 folgt eine Flip-Flop-Schaltung 65 zur Rückgewinnung der ursprünlgichen Signalamplitude des digitalen Datenstroms am Ausgang 15 des A/D-Wandlers in Höhe von etwa 0,5 Volt. Diese Flip-Flop-Schaltung umfaßt zwei Flip-Flops 66 und 67. Der D-Eingang des Flip-Flops 66 und der D-Eingang des Flip-Flops 67 sind mit dem Ausgang der Flip-Flop-Schaltung verbunden. Der Takteingang des Flip-Flops 66 und der Takteingang des Flip-Flops 67 sind mit einem Taktausgang 68 des D/A-Wandlers 52 verbunden, der ein LRCK-Signal führt. Der Q-Ausgang des Flip-Flops 66 und der Q-Ausgang des Flip-Flops 67 sind mit einer der Amplitudenanpassungsschaltung 65 nachgeschalteten Signalflankenanpassungsschaltung in Gestalt einer NAND-Gatterschaltung 69 verbunden, die vier NAND-Gatter 70, 71, 72 und 73 umfaßt.

Ein Eingang des NAND-Gatters 70 ist mit dem Q-Ausgang des Flip-Flops 67 verbunden. Der andere Eingang des NAND-Gatters 70 ist mit dem Q-Ausgang des Flip-Flops 67 verbunden. Der andere Eingang des NAND-Gatters 70 ist mit dem Ausgang des NAND-Gatters 71 verbunden. Die beiden Eingänge des NAND-Gatters 71 sind mit Masse (DGND) verbunden. Der Ausgang des NAND-Gatters 70 ist mit einem Eingang des NAND-Gatters 73 verbunden. Der andere Eingang des NAND-Gatters 73 ist mit dem Ausgang des NAND-Gatters 72 verbunden, dessen einer Eingang mit dem Q-Ausgang des Flip-Flops 66 verbunden ist und dessen anderer Ausgang mit dem Taktausgang 68 des D/A-Wandlers verbunden ist, der das LRCK-Signal führt. Der Ausgang des NAND-Gatters 73 bildet den Ausgang der NAND-Gatterstufe 69.

Auf die NAND-Gatterstufe 69, die die ursprüngliche Flankensteilheit des digitalen Datenstroms am Ausgang 15 des A/D-Wandlers 10 wiedergewinnt, ist mit einer Inverterschaltung 74 verbunden, die vier EXOR-Gatter 75, 76, 77 und 78 umfaßt und dazu dient, die Daten des digitalen Datenstroms von der NAND-Gatterschaltung 69 seriell auszugeben. Ein Eingang des EXOR-Gatters 75 ist mit seinem Ausgang und einem Eingang des EXOR-Gatters 76 verbunden, während der andere Eingang des EXOR-Gatters 75 mit dem Ausgang der NAND-Gatterschaltung 69 (Ausgang des NAND-Gatters 73) verbunden ist. Der andere Eingang des EXOR-Gatters 76 ist mit einem ein WRCK-Signal führenden Takt-Ausgang 89 des D/A-Wandlers 52 verbunden, während der Ausgang des EXOR-Gatters 76 mit beiden Eingängen des EXOR-Gatters 77 und dem Ausgang des EXOR-Gatters 78 verbunden ist. Die beiden Eingänge des EXOR-Gatters 78 sind auf positive Versorgungsspannung der Inverterschaltung 74 gelegt. Der Ausgang des EXOR-Gatters 77 bildet den Ausgang der Inverter-Schaltung 74.

Der Ausgang der Inverterschaltung 74 ist mit einer Amplitudenbeschneidungsschaltung 79 verbunden, die eine Pufferstufe 80 umfaßt, deren Ein- und Ausgang mittels eines Widerstands 81 überbrückt ist und die einen Teil eines integrierten Hex.-Inverters bildet, dessen übrige fünf Pufferstufen 82 bis 86 die parallel geschalteten Stufen einer Pufferschaltung 87 bildet, welche zwischen die Amplitudenbeschneidungsschaltung 79 und den Datenstromeingang 88 des D/A-Wandlers 52 geschaltet ist. Am Eingang 88 liegt damit der rückgewonnene digitale Datenstrom entsprechend dem Datenstrom entsprechend dem Datenstrom am Ausgang 15 des A/D-Wandlers 10 an, der beim dargestellten Ausführungsbeispiel ein S/PDIF-Datenstrom ist, der von dem D/A-Wandler 52 problemlos in analoge Signale gewandelt werden kann.

## Patentansprüche

1. Digitale Datenübertragungsstrecke, insbesondere zum Übertragen von digitalen Audiodaten, mit einem Sender (11), der mit einem zu sendenden digitalen Datenstrom beaufschlagt ist, und mit einem Empfänger (50), der mit dem gesendeten digitalen Datenstrom beaufschlagt ist, **dadurch gekennzeichnet, daß** dem Sender (11) eine Signalanpassungsschaltung (12) vorgeschaltet ist, welche die Signalform des ihm zugeführten digitalen Datenstroms in eine vom Sender (11) verlustfrei übertragbare Signalform umsetzt.

2. Digitale Datenübertragungsstrecke nach Anspruch 1, **dadurch gekennzeichnet, daß** dem Empfänger (50) eine Signalanpassungsschaltung (55) nachgeschaltet ist, welche aus dem empfangenen digitalen Datenstrom einen digitalen Datenstrom mit einer Signalform analog zum ursprünglichen Datenstrom rückgewinnt.

3. Digitale Datenübertragungsstrecke nach Anspruch 1 oder 2, **dadurch gekennzeichnet, daß** der Sender (11) und der Empfänger (50) drahtlos kommunizieren.

4. Digitale Datenübertragungsstrecke nach Anspruch 3, **dadurch gekennzeichnet, daß** der Sender (11) und der Empfänger (50) über Glasfaser kommunizieren.

5. Digitale Datenübertragungsstrecke nach Anspruch 3, **dadurch gekennzeichnet, daß** der Sender (11) und der Empfänger (50) über Antennen (11a, 51) kommunizieren.

6. Digitale Datenübertragungsstrecke nach Anspruch 5, **dadurch gekennzeichnet, daß** die Antennen (11a, 51) Richtfunkantennen sind.

7. Digitale Datenübertragungsstrecke nach einem der Ansprüche 1 bis 6, **dadurch gekennzeichnet, daß** die Sendefrequenz im GHz-Bereich liegt und vor allem 2,465 GHz beträgt.

8. Digitale Datenübertragungsstrecke nach Anspruch 7, **dadurch gekennzeichnet, daß** die Sendefrequenz im MHz-Bereich liegt und vor allem 868 MHz beträgt.

9. Digitale Datenübertragungsstrecke nach einem der Ansprüche 1 bis 8, **dadurch gekennzeichnet, daß** die Signalformanpassung eine Amplitudenanpassung umfaßt.

10. Digitale Datenübertragungsstrecke nach Anspruch 9, **dadurch gekennzeichnet, daß** die Signalamplitude auf TTL-Pegel angepaßt wird.

11. Digitale Datenübertragungsstrecke nach einem der Ansprüche 1 bis 10, **dadurch gekennzeichnet, daß** die Signalformanpassung eine Anpassung der Signalflanken umfaßt.

12. Digitale Datenübertragungsstrecke nach Anspruch 11, mit einem trapezförmigen Datenstromsignal, **dadurch gekennzeichnet, daß** die Steilheit der Signalflanken erhöht wird.

13. Digitale Datenübertragungsstrecke nach Anspruch 12, **dadurch gekennzeichnet, daß** das Datenstromsignal in ein rechteckförmiges Signal umgesetzt wird.

14. Digitale Datenübertragungsstrecke nach einem der Ansprüche 1 bis 13, **dadurch gekennzeichnet, daß** die senderseitige Signalanpassungsschaltung (12) vom Takt (WLCK, LRCK) des ursprünglichen digitalen Datenstroms getaktet ist.

15. Digitale Datenübertragungsstrecke nach einem der Ansprüche 1 bis 14, **dadurch gekennzeichnet, daß** die empfängererseitige Signalanpassungsschaltung (55) vom Takt (LRCK) des von ihr ausgegebenen digitalen Datenstroms getaktet ist.

16. Digitale Datenübertragungsstrecke nach einem der Ansprüche 1 bis 15, mit einem A/D-Wandler (10) als senderseitige Eingangsstufe, **dadurch gekennzeichnet**, die senderseitige Anpassungsschaltung (12) von Taktsignalen (WCLK, LRCK) des A/D-Wandlers (10) getaktet ist.

17. Digitale Datenübertragungsstrecke nach Anspruch 16, **dadurch gekennzeichnet, daß** die senderseitige Anpassungsschaltung (12) zur Amplitudenanpassung des digitalen Signalstroms vom A/D-Wandler (10) an den Sender (11) eine Flip-Flop-Schaltung (26) umfaßt.

18. Digitale Datenübertragungsstrecke nach Anspruch 16 oder 17, **dadurch gekennzeichnet, daß** die senderseitige Anpassungsschaltung (12) zur Anpassung der Flankensteilheit des digitalen Signalstroms vom A/D-Wandler (10) an den Sender (11) eine NAND-Gatter-Schaltung (29) umfaßt.

19. Digitale Datenübertragungsstrecke nach Anspruch 16, 17 oder 18, **dadurch gekennzeichnet, daß** dem A/D-Wandler (10) eine Pufferschaltung (18) nachgeschaltet ist.

20. Digitale Datenübertragungsstrecke nach einem der Ansprüche 16 bis 19, **dadurch gekennzeichnet, daß** die senderseitige Anpassungsschaltung (12) ausgangseitig eine Inverter-Schaltung (34) zur seriellen Ausgabe der Daten des digitalen Datenstroms von den Signalveränderungsstufen (26, 29) umfaßt.

21. Digitale Datenübertragungsstrecke nach einem der Ansprüche 16 bis 20, **dadurch gekennzeichnet, daß** die senderseitige Anpassungsschaltung (12) als Ausgangsstufe eine Pufferschaltung (40) umfaßt.

22. Digitale Datenübertragungsstrecke nach Anspruch 21, **dadurch gekennzeichnet, daß** der Pufferschaltung (40) eine Amplitudenbeschneidungsschaltung (41) nachgeschaltet ist.

23. Digitale Datenübertragungsstrecke nach einem der Ansprüche 16 bis 22, mit einem D/A-Wandler (52) als empfängererseitige Ausgangsstufe, **dadurch gekennzeichnet, daß** die empfängererseitige Anpassungsschaltung (55) bezüglich ihrer Signalanpassungsfunktion komplementär zur senderseitigen Anpassungsschaltung (12) ausgelegt ist.

24. Digitale Datenübertragungsstrecke nach Anspruch 23, **dadurch gekennzeichnet,** die empfängerseitige Anpassungsschaltung (55)von Taktsignalen (LRCK) des D/A-Wandlers (52) getaktet ist.

25. Digitale Datenübertragungsstrecke nach Anspruch 23 oder 24, **dadurch gekennzeichnet, daß** die empfängerseitige Anpassungsschaltung (55) zur Amplitudenrückgewinnung des vom A/D-Wandler bereitgestellten ursprünglichen digitalen Datenstroms aus dem vom Empfänger (50) bereitgestellten digitalen Datenstrom eine Flip-Flop-Schaltung (65) umfaßt.

26. Digitale Datenübertragungsstrecke nach Anspruch 23, 24 oder 25, **dadurch gekennzeichnet, daß** die empfängererseitige Anpassungsschaltung (55) zur Rückgewinnung der Flankensteilheit des ursprünglichen digitalen Datenstroms aus dem digitalen Datenstrom vom Empfänger (50) eine NAND-Gatter-Schaltung (69) umfaßt.

27. Digitale Datenübertragungsstrecke nach einem der Ansprüche 23 bis 26, **dadurch gekennzeichnet, daß** dem Empfänger (50) eine Pufferschaltung (59) nachgeschaltet ist.

28. Digitale Datenübertragungsstrecke nach Anspruch 27, **dadurch gekennzeichnet, daß** der Pufferschaltung (59) eine Amplitudenbeschneidungsschaltung (56) vorgeschaltet ist.

29. Digitale Datenübertragungsstrecke nach einem der Ansprüche 23 bis 28, **dadurch gekennzeichnet, daß** die empfängerseitige Anpassungsschaltung (55), dem D/A-Wandler (52) vorgeschaltet eine Inverter-Schaltung (74) zur seriellen Ausgabe der Daten des digitalen Datenstroms umfaßt.

30. Digitale Datenübertragungsstrecke nach einem der Ansprüche 23 bis 29, **dadurch gekennzeichnet, daß** die empfängererseitige Anpassungsschaltung (55) als Ausgangsstufe eine Pufferschaltung (87) umfaßt.

31. Digitale Datenübertragungsstrecke nach Anspruch 30, **dadurch gekennzeichnet, daß** der Pufferschaltung (87) eine Amplitudenbeschneidungsschaltung (79) vorgeschaltet ist.

32. Digitale Datenübertragungsstrecke nach einem der Ansprüche 1 bis 31, **dadurch gekennzeichnet, daß** der digitale Datenstrom in einer Anzahl von n > 2 Kanälen organisiert ist, die senderseitig mittels eines digitalen Multiplexers auf ein Bussystem gemultiplext sind, das mit der senderseitigen Anpassungsschaltung verknüpft ist.
